# EUROPÄISCHE PATENTSCHRIFT

(11) **EP 0 332 211 B1**
(45) Veröffentlichungstag und Bekanntmachung des Hinweises auf die Patenterteilung: **07.06.1995**
(21) Anmeldenummer: 89104303.6
(22) Anmeldetag: 10.03.1989
(51) Int. Cl.: G01J 3/28, G01J 3/36

(54) **Echelle-Spektrometer zur Untersuchung hochaufgelöster Teilspektren eines Echelle-Spektrums**
Echelle-spectrometer for exploring high resolution part spectra of an echelle spectrum
Spectromètre échelle pour l'exploration de spectres partiels à haute résolution dans un spectre d'échelle

(30) Priorität: 11.03.1988 DD 313622
(43) Veröffentlichungstag der Anmeldung: 13.09.1989
(73) Patentinhaber: Becker-Ross, Helmut, Dr., D-12557 Berlin (DE); Engel, Klaus-Eberhard, Dipl. Phys., D-15234 Frankfurt (DE); Engel, Susanne, D-15234 Frankfurt (DE); Florek, Stefan, Dr., D-12526 Berlin (DE); Matzke, Wolf Ekkehard, Dipl. Ing., D-81735 München (DE); Tischendorf, Reinhard, Dipl. Ing., D-10119 Berlin (DE)
(72) Erfinder: Becker-Ross, Helmut, Dr., Dipl.-Phys., D-12557 Berlin (DE); Florek, Stefan, Dr., Dipl.-Phys., D-12526 Berlin (DE); Tischendorf, Reinhard, Dipl.-Ing., D-10119 Berlin (DE); Engel, Klaus-Eberhard, Dipl.-Phys., D-15234 Frankfurt/Oder (DE); Matzke, Wolf-Ekkehard, Dipl.-Ing., D-81735 München (DE); Engel, Susanne, D-15234 Frankfurt/Oder (DE)
(74) Vertreter: Walter, Wolf-Jürgen

(56) Entgegenhaltungen:
- EP-A- 0 316 802
- US-A- 4 049 353
- ANALYTICAL CHEMISTRY, Band 60, Nr. 5, 1. März 1988, Seiten 327-335, Washington, DC, US; P.M. EPPERSON et al.: "Applications of charge transfer devices inspectroscopy"

## Beschreibung

Die Erfindung betrifft eine Anordnung zur Untersuchung hochaufgelöster Teilspektren eines Echelle-Spektrums und ist anwendbar zur gleichzeitigen Bestimmung der Intensität verschiedener Spektralelemente eines Strahlungsspektrums, das durch ein Echelle-Spektrometer abgebildet wird.

Es sind verschiedene Echelle-Spektrometer bekannt, bei denen das Spektrum eines ausgedehnten Wellenlängenbereiches in eine hohe Zahl von Interferenzordnungen zerlegt und mit großer Winkeldispersion auf eine kleine Fläche abgebildet wird.

Häufig ist es notwendig, gleichzeitig mehrere Spektrallinien oder Spektrallinienintervalle des Gesamtspektrums mit hoher Zeitauflösung bzgl. ihrer Intensität auszuwerten. Die bisher zu diesem Zweck eingesetzten Detektorsysteme lassen sich in drei Gruppen unterteilen.

### 1. CCD-Sensorzeilen

Die begrenzte Anzahl von Sensorelementen einer CCD-Sensorzeile erfordert notwendigerweise in Abhängigkeit vom zu erreichenden spektralen Auflösungsvermögen eine Einschränkung des gleichzeitig meßbaren Wellenlängenbereiches. In Spectrochim. Acta. Part. B Vol 42 B, No 1/2, 1987, S. 341 wird eine Anordnung beschrieben, bei der mittels eines Polychromators eine Vorauswahl interessierender Spektrallinien aus dem Gesamtspektrum erfolgt.

Die Lösung ist optisch und mechanisch sehr aufwendig und durch häufig auftretende Linienkoinzidenzen benachteiligt.

### 2. Detektorsysteme mit diskreten Meßstellen

Es sind mehrere Anordnungen bekannt, die eine Spaltmaske in der Fokalfläche benutzen, um einzelne Spektrallinien aus einem flächenhaften Echelle-Spektrum zu selektieren und über geeignete Mittel der Lichtleitung einer geringen Anzahl von Einzeldetektoren zuzuführen (z.B. US-PS 4 09 353, G 01 J, 3/38).

Diese Anordnungen haben den Nachteil, daß die Zahl der Meßstellen sehr begrenzt ist und die Flexibilität beim Wechsel auf andere zu untersuchende Spektrallinien eingeschränkt ist.

### 3. Flächenhafte Detektorsysteme

Zur Registrierung des Gesamtspektrums werden in speziellen Anwendungsfällen flächenhafte Detektorsysteme wie Vidicons, Dissektor-Röhren oder CCD-Sensormatrizes eingesetzt (Y. Talmi: Multichannel Image Detectals. American chemical Society, Washington D.C. 1979). Dabei ergeben sich Probleme durch die ungenügende Anpassung der Detektoren an die Erfordernisse des Echelle-Spektrums.

Im Echelle Spektrum liegen die Spektrallinien in unregelmäßiger lückenhafter Verteilung vor, da die einzelnen Ordnungszeilen des Gesamtspektrums mit ungleichmäßigem Abstand voneinander, in sich gekrümmt und mit ortsabhängigen Neigungswinkeln abgebildet werden. Um die im allgemeinen geforderte hohe Ortsauflösung des Detektors über die resultierende große Fokalfläche zu realisieren, werden eine extrem hohe Anzahl von Sensorelementen und eine hohe Absolutgenauigkeit der Positionsbestimmung gefordert.

Die störanfällige Ablenkung der Elektronenstrahlen in den vakuum-elektronischen Detektorsystemen stellt eine wesentliche Begrenzung der Absolutgenauigkeit der Positionsbestimmung und damit des erreichbaren spektralen Auflösungsvermögens des Spektrometers dar. Dieser Mangel, verbunden mit dem erheblichen Platzbedarf dieser Detektoren, besteht nicht im Einsatz von CCD-Sensormatrizes. Hierbei wirken sich jedoch ein durch das unangepaßte geometrische Raster der Sensorelemente bedingtes verringertes Signal/Rausch-Verhältnis und eine durch die hohe Zahl der Sensorelemente reduzierte Zeitauflösung nachteilig aus.

Es müssen stets alle Sensorelemente des Detektors, d.h. auch die Elemente aus den Freiflächen des Echelle-Spektrums und aus den nicht relevanten Spektralbereichen ausgelesen und deren Ladungen analog/digital-gewandelt, gespeichert werden.

In der EP-A-0316802 (veröffentlicht am 24.5.89) ist ein Festkörpermatrix-Detektor für ein Spektrometer beschrieben, bei dem Photosensoren auf einem IC-Chip an den Orten vorausgewählter Spektrallinien diskret angeordnet sind, wobei die Photosensoren aus einer CCD-Sensorzeile und einer zugehörigen Logikschaltung bestehen.

Der Erfindung liegt die Aufgabe zugrunde, eine Anordnung zur Untersuchung hochaufgelöster Teilspektren eines Echelle-Spektrums zu schaffen, das bei spektralanalytischer Messung in die Fokalfläche eines Echelle-Spektrometers abgebildet wird, mit der die analytisch relevanten Bereiche des Spektrums mit geringer Redundanz, großer Flexibilität und hoher Zeitauflösung bei geringen Anforderungen an die Auswerteelektronik gemessen werden können.

Diese Aufgabe wird erfindungsgemäß gelöst. Der in der Fokalfläche des Echelle-Spektrometers angeordnete flächenhafte fotoelektrische Detektor ist als monolithisches optoelektronisches Bauelement ausgebildet. Auf dem Detektor an den Orten vorausgewählter Spektrallinien sind modifizierte CCD-Sensorzeilen (Photosensor) diskret angeordnet, deren Sensorelemente 60 nacheinander in Richtung der Dispersion des Echelle-Gitters verlaufen. Die Gesamtzahl der Sensorelemente 60 aller CCD-Sensorzeilen auf dem Detektor ist vorzugsweise geringer als die Anzahl der Spektralelemente in Echelle-Spektrum, und eine digitale Logikschaltung erlaubt mittels der von ihr verwalteten Aktivierungspegel die serielle Auslesung der Signale einer wählbaren Teilmenge aus allen CCD-Sensorzeilen in wählbarer Reihenfolge über eine gemeinsame Ausgangssignalleitung in Abhängigkeit von äußeren Steuersignalen. Die Ausbildung des Detektors als monolithisches optoelektronisches Bauelement garantiert, daß die Ortsverteilung der modifizierten CCD-Sensorzeilen, welche in der Fokalfläche den Wellenlängenpositionen der vorausgewählten Spektrallinien entspricht, problemlos mit sehr hoher Genauigkeit reproduziert wird.

Erfindungsgemäß enthält jede Zeile eine zusätzliche Zwischenspeicheranordnung jeweils zwischen den Sensorspeichern und dem Transportschieberegister, welche die zeitgleiche Messung der auffallenden Strahlungsintensitäten in allen Zeilen des Gesamtdetektors dadurch ermöglicht, da die Überführungsgates zwischen den Sensorspeichern und den Zwischenspeicheranordnungen aller Zeilen parallel geschaltet sind.

Damit sind beim Einsatz des Detektors im Echelle-Spektrometer die Richtigkeit der Wellenlängenpositionen über lange Zeit und die Austauschbarkeit von Gerät zu Gerät garantiert. Die Anordnung der Zeilen auf dem Detektor kann exakt an die Lage der vorausgewählten Spektrallinien in den nicht äquidistanten, gekrümmten und geneigten Spektralordnungen des Echelle-Spektrums in der Fokalfläche des Spektrometers angepaßt werden. Die Fläche der einzelnen Sensorelemente kann optimal an die Fläche der Spektralelemente des Echelle-Spektrums, welche von der Größe des Eintrittsspaltes, dem Abbildungsmaßstab des Spektrometers und den Geräteaberrationen sowie von der Meßaufgabe bestimmt ist, angepaßt werden.

Die Anzahl der Sensorelemente pro Zeile wird in Anpassung an die Meßaufgabe so gewählt, daß sowohl das spektrale Intensitätsprofil der Analysenlinie als auch die spektrale Intensitätsverteilung in der analytisch relevanten spektralen Umgebung der Linie simultan gemessen werden können.

Die Zeilen sind bezüglich ihrer Zuleitungen für Versorgungspotentiale und Taktsignale sowie bzgl. ihrer Ausgangssignalleitungen über einen integrierten Leitungsbus, welcher direkt an die Anschlußbondinseln des Detektors geführt ist, parallel geschaltet. Die Aktivierung der einzelnen Zeilen zum Zweck der seriellen Auslesung erfolgt mittels eines speziellen Systems von Aktivierungsleitungen, wobei eindimensionale oder Matrixadressierung zur Anwendung kommen kann.

Jede Zeile enthält zusätzlich zu den bekannten Schaltungselementen einer CCD-Sensorzeile eine Logikschaltung, welche in Abhängigkeit von dem mittels der Aktivierungsleitung (bzw. Leitungen) definierten Aktivierungszustand die Übernahme der den zu messenden Photonenzahlen proportionalen Ladungsmengen in das Transportschieberegister der Zeile freigibt bzw. sperrt.

Weiterhin wird von der Logikschaltung ein zwischen dem Ausgangsverstärker der Zeile und der Ausgangssignalleitung des integrierten Leitungsbusses angeordneter integrierter Schalter zeitlich korreliert mit dem Aktivierungszustand geschaltet.

Die Logikschaltung ermöglicht darüber hinaus zur Minimierung der Verlustleistung des Gesamtdetektors in Abhängigkeit vom Aktivierungszustand das Schalten von Versorgungspotentialen und Taktimpulsen der Zeile in geeigneter zeitlicher Reihenfolge.

Zusätzlich zu den modifizierten CCD-Sensorzeilen ist auf dem monolithischen optoelektronischen Detektor eine digitale Logikschaltung integriert, welche die Zeilen mittels der von ihr verwalteten Aktivierungsleitungen aktiviert. In der einfachsten Ausbildung ist die Logikschaltung als Decoderanordnung ausgebildet, deren Eingänge an die Anschlußbondinseln des Detektors geführt sind. Gegenüber der EP-A-0316802 wird durch die Anordnung des Zwischenspeichers die zeitgleiche Messung aller Zeilen möglich und dadurch eine lichtintegrationsgesteuerte und spektrallinienintensitätsangepaßte Spektralanalyse.

Die Erfindung soll nachstehend an einem Ausführungsbeispiel anhand der zugehörigen Zeichnung erläutert werden. Es zeigen:
Fig. 1: den prinzipiellen Aufbau des optoelektronischen Detektors für ein Echelle-Spektrometer
Fig. 2: den prinzipiellen Aufbau einer integrierten modifizierten CCD-Sensorzeile.

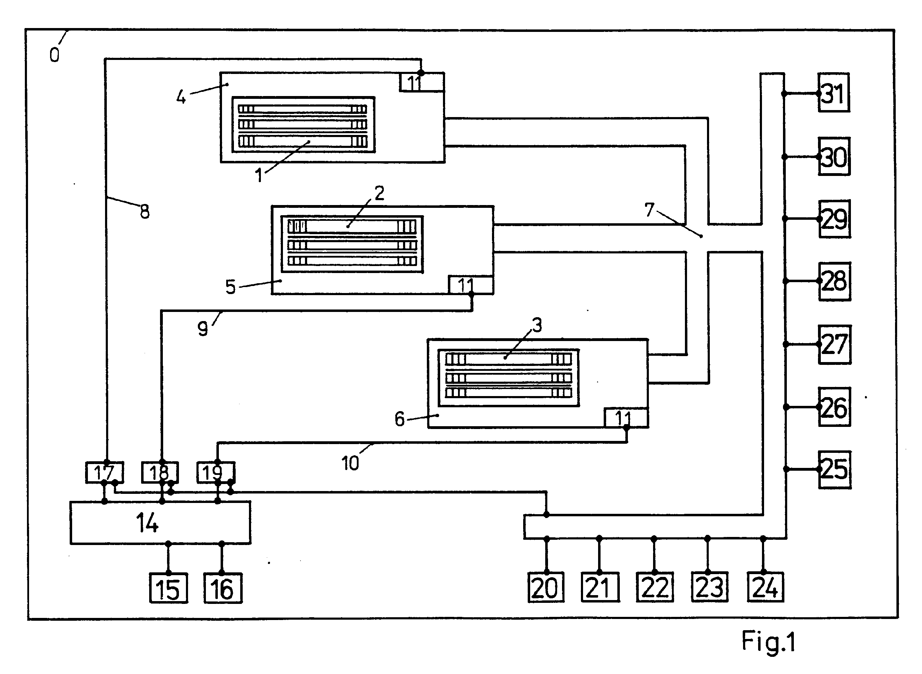

Auf einer Halbleiteroberfläche (Chip) 0 werden an drei Positionen 1 - 3, die den Orten vorausgewählter Spektrallinien entsprechen, jeweils vollständige CCD-Sensorzeilen 4 - 6 mit je 32 Sensorelementen derart aufgebaut, daß die Flächen der Sensorelemente der spektrometrischen Aufgabenstellung angepaßt sind und die Spektrallinie im mittleren Sensorbereich der Zeile erscheint (Fig. 1). Alle drei CCD-Sensorzeilen 4 - 6 sind über einen integrierten Leitungsbus 7, der bis auf die Aktivierungsleitungen 8 - 10 die an sich bekannten Versorgungspotentiale und Taktimpulsleitungen sowie die gemeinsame Ausgangssignalleitung führt, parallel geschaltet. Diese Leitungen sind zu den am Chiprand befindlichen Anschlußbondinseln 20 - 31 geführt. Auf der Chipfläche 0 ist weiterhin für die von außen wählbar zu aktivierenden CCD-Sensorzeilen 4 - 6 mindestens ein Demultiplexer 14 integriert, so daß über ein externes Steuergerät die vorgewählten CCD-Sensorzeilen 4 - 6 mittels eindimensionaler Adressierung zeitlich nacheinander über die Aktivierungsleitungen 8 - 10 und Triggereingänge 11 angesprochen und somit aktiviert werden.

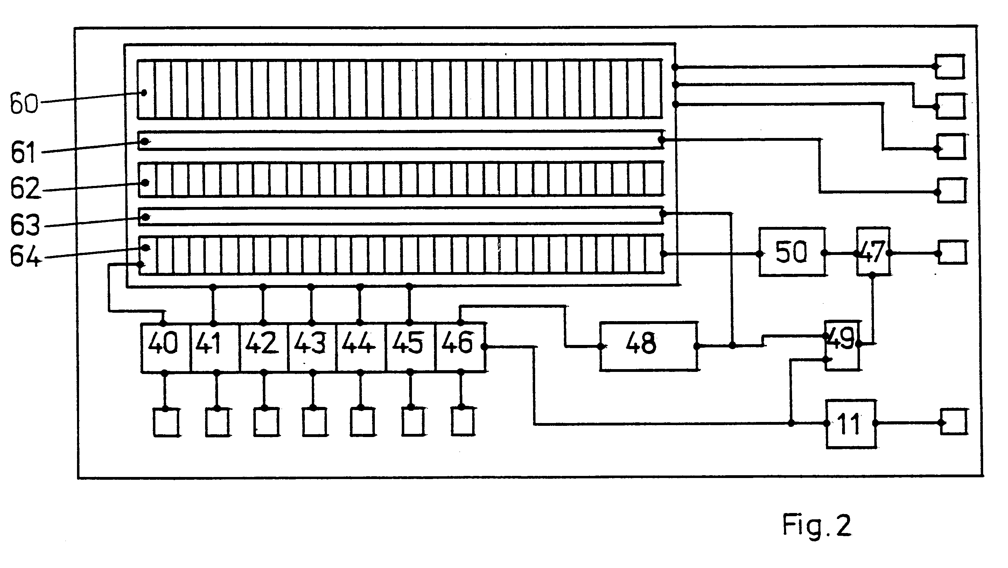

Der integrierte Demultiplexer 14 ist eingangsseitig mit dem am Chiprand befindlichen Anschlußbondinseln 15 - 16 verbunden. Zwischen den Ausgängen des Demultiplexers 14 und den Aktivierungsleitungen 8 - 10 ist in jeder Leitung eine Speicherzeile 17 - 19 angeordnet, derart, daß nach der Vorwahl durch das externe Steuergerät die betreffende CCD-Sensorzeile weiterhin für eine definierte Zeit, die mittels einer integrierten Teileranordnung und Zählen der Transferimpulse bestimmt wird, aktiviert bleibt, um das vollständige Auslesen der Ausgangssignale auf die gemeinsame Ausgangsleitung zu garantieren. Jede Sensorzeile 4 - 6 ist schaltungstechnisch mit Anschlußinseln für einen Triggereingang 11, der jeweils durch mindestens eine zugeführte Aktivierungsleitung 8; 9; 10 einen Aktivierungspegel an dieser Zeile für einen definierten Zeitabschnitt mittels der Speicherzelle 17; 18; 19 erzeugt und mit Anschlußinseln für die digitalen Schalter 40 - 46 (Fig. 2) versehen, die durch die gleiche Aktivierungsleitung getriggert, die Versorgungspotentiale und Taktsignale an die CCD-Sensorzeile 4 - 6 zuschalten, die für die Ladungsübernahme aus dem Zwischenspeicher 62 mittels Überführungsgate 63 in das Transportschieberegister 64 und die für das Auslesen der Ausgangsdaten über den Verstärker 50 und den Schalter 47 in die Ausgangssignalleitung notwendig sind (Fig. 2). Jede CCD-Sensorzeile 4 - 6 ist weiterhin schaltungstechnisch mit einem Verzögerungselement 48, z.B. einem 2:1 Teiler versehen, der durch den Aktivierungspegel initiiert wird und der die zugeschalteten Transferimpulse für das Überführungsgate 63 verzögert, wodurch ein zeitlich verschobener Transferimpuls die Ladungsübernahme aus dem Zwischenspeicher 62 in das Transportschieberegister 64 bewirkt.

Synchron dazu werden der verzögerte Transferimpuls und der Aktivierungspegel benutzt und über ein AND-Gatter 49 verknüpft, um einem Anlageschalter 47 zu öffnen, der die seriellen Ausgangssignale des Ausgangsverstärkers 50 der allen CCD-Sensorzeilen gemeinsamen Ausgangssignalleitung zuführt.

Die Chipanordnung 0 ist als monolithischer Detektor zur Messung optischer Signale in der Echelle-Spektrometrie derart zu betreiben, daß sie nach Montage in ein entsprechendes Gehäuse in der Fokalebene des Echelle-Spektrometers justiert wird. Mit Hilfe eines externen Steuergerätes werden alle Versorgungspotentiale und Taktimpulse über den Leitungsbus 7 an alle CCD-Sensorzeilen 4 - 6 geschaltet, so daß nach einer definierten Meßzeit mittels eines gemeinsames Taktimpulses an das Überführungsgate 61 die in den CCD-Sensorelementen 60 generierten Ladungsmengen in die Zwischenspeicher 62 eingeschrieben werden. Entsprechend einer gewählten Auslesereihenfolge der CCD-Sensorzeilen 4; 5; 6; werden vom externen Steuergerät über die Anschlußbondinseln 15 - 16 dem Demultiplexer 14 kontinuierliche kodierte Adreßimpulse zugeführt, die bezüglich der Frequenz mit den Transferimpulsen der Überführungsgates 63 übereinstimmen. Mit Übernahme des ersten Adreßimpulses für Zeile 4 aktiviert der Demultiplexer 14 über die Speicherzelle 17 die Aktivierungsleitung 8, wodurch nur in Zeile 4 mittels Triggereingang 11 über die Schalter 40 - 46 die Potential- und Taktleitungen für den vollständigen Betrieb der Zeile an den Leitungsbus 7 zugeschaltet werden. Ein darauffolgender Transferimpuls über den Leitungsbus 7 an alle Sensorzeilen 4 - 6 wird nur von Zeile 4 über den geöffneten Schalter 46 übernommen und dem 2:1 Teiler 48 zugeführt. Mit dem zweiten Adreßimpuls für Zeile 5 aktiviert der Demultiplexer 14 über die Speicherzelle 18 und die Aktivierungsleitung 9 den Triggereingang 11 der Zeile 5, wodurch wiederum die Potential- und Taktleitungen an diesen hinzugeschaltet werden. Der nächste Transferimpuls bewirkt einerseits in Zeile 4 das Auslösen des verzögerten ersten Transferimpulses aus dem Teiler 48 und damit den Impuls für das Überführungsgate 63 zur Übernahme der Ladungspakete aus dem Zwischenspeicher 62 in das Transportschieberegister 64. Gleichzeitig wird mittels AND-Gatter 49 Schalter 47 geöffnet, so daß mit Hilfe der Transporttakte im Verstärker 50 erzeugte Ausgangssignale in die Ausgangssignalleitung gelangen. Andererseits wird dieser Transferimpuls über Schalter 46 in den 2:1 Teiler 48 der Zeile 5 übernommen. Der dritte Adreßimpuls bewirkt durch den Demultiplexer 14 die Aktivierung des Triggers 11 der Zeile 6 und damit das Zuschalten an den Leitungsbus 7. Mit dem dritten Transferimpuls ist in Zeile 4 das Auslesen der Ausgangssignale beendet, der Aktivierungspegel der Leitung 8 wird durch die Speicherzelle 17 abgeschaltet und in Zeile 5 der verzögerte Transferimpuls zur Übernahme der Sensorladungen ins Transportschieberegister ausgelöst und Schalter 47 geöffnet. Gleichzeitig wird dieser Transferimpuls in den 2:1-Teiler 48 der Zeile 6 eingelesen. Nach diesem Schema werden durch das externe Steuergerät kontinuierlich Adreß-, Transfer- und Transporttaktimpulse bereitgestellt, die das Betreiben des monolithischen Detektors ermöglichen.

Bei der erfindungsgemäßen Anordnung wird somit nur eine geringe Zahl von CCD-Sensorzeilen gleichzeitig und nacheinander schaltungstechnisch vollständig aktiviert und gesteuert, so daß sich jede vorgewählte CCD-Sensorzeile funktionsbereit einordnen kann und daß an der gemeinsamen Ausgangssignalleitung über einen Gesamtabtastzyklus hinweg eine kontinuierliche Folge von Ausgangssignalen der vorgewählten CCD-Sensorzeilen in der vorgewählten Reihenfolge bis zum Auslesen des letzten CCD-Schieberegisters der letzten Sensorzeile nacheinander, vergleichbar einer einzigen großen CCD-Sensorzeile, anfällt.

### Aufstellung der verwendeten Bezugszeichen

- 0: Halbleiteroberfläche
- 1 - 3: Positionen
- 4 - 6: CCD-Sensorzeilen
- 7: Leitungsbus
- 8 - 10: Aktivierungsleitungen
- 11: Triggereingang
- 14: Demultiplexer
- 15;16: Anschlußbondinseln
- 17-19: Speicherzellen
- 20-31: Anschlußbondinseln
- 40-46: digitale Schalter
- 47: Analogschalter
- 48: Verzögerungselement
- 49: AND-Gatter
- 50: Ausgangsverstärker
- 60: Sensorelemente
- 61: Überführungsgate
- 62: Zwischenspeicher
- 63: Überführungsgate
- 64: Transportschieberegister

## Patentansprüche

1. Echelle-Spektrometer zur Untersuchung hochaufgelöster Teilspektren eines Echelle-Spektrums mit einem ortsauflösenden photoelektrischen Detektor mit mehreren, an den Orten (1;2;3) vorausgewählter Spektrallinien in der Fokalfläche des Echelle-Spektrometers auf einem IC-Chip (0) angeordneten Photosensoren, wobei jeder der Photosensoren aus einer CCD-Sensorzeile (4;5;6) und einer Logikschaltung besteht, die in Abhängigkeit von Aktivierungspegeln das Schalten von Versorgungspotentialen und Taktsignalen sowie die Übergabe von Ausgangssignalen auf eine gemeinsame Ausgangssignalleitung ermöglicht,
wobei die einzelnen Sensorelemente (60) der CCD-Sensorzeilen (4;5;6) im Verwendungsfall bezüglich ihrer Flächen an die Spektralelemente des zu messenden Echelle-Spektrums angepaßt sind und nacheinander in Richtung der Dispersion des Echelle-Gitters verlaufen,
wobei die Gesamtzahl der Sensorelemente (60) aller CCD-Sensorzeilen (4;5;6) auf dem Chip (0) im Verwendungsfall vorzugsweise geringer ist als die Anzahl der Spektralelemente im Echelle-Spektrum,
wobei eine digitale Logikschaltung mittels der von ihr verwalteten Aktivierungspegel die serielle Auslesung der Signale einer wählbaren Teilmenge aus allen CCD-Sensorzeilen (4;5;6) in wählbarer Reihenfolge über die gemeinsame Ausgangssignalleitung in Abhängigkeit von äußeren Steuersignalen erlaubt, und wobei jeder Photosensor zusätzlich zwischen dem Sensorspeicher und dem Transportschieberegister (64) der CCD-Sensorzeile (4;5;6) eine Zwischenspeicheranordnung (62) enthält und die Überführungsgates (61) zwischen den Sensorspeichern aller Zeilen und den jeweiligen Zwischenspeicheranordnungen (62) aller Zeilen (4;5;6) parallel geschaltet sind.

2. Echelle-Spektrometer nach Anspruch 1, dadurch gekennzeichnet, daß die Höhe der einzelnen Sensorelemente (60) der CCD-Sensorzeilen (4;5;6) gleich dem minimalen Abstand benachbarter Ordnungszeilen im Echelle-Spektrum ist und die Breite der einzelnen Sensorelemente gleich der abberationsbedingten Apparatebreite im Echelle-Spektrum ist.

3. Echelle-Spektrometer nach Anspruch 1, dadurch gekennzeichnet, daß die digitale Logikschaltung in Form von zwei Decoderanordnungen ausgebildet ist, die eine zweidimensionale Anordnung von Aktivierungsleitungen (8; 9; 10) verwalten.

## Claims

1. Echelle spectrometer for examining high-resolution partial spectra of an echelle spectrum having a site-resolving photoelectric detector with a plurality of photosensors disposed on an IC chip (0) at the sites (1; 2; 3) of preselected spectral lines in the focal area of the echelle spectrometer, each of the photosensors consisting of a CCD sensor line (4; 5; 6) and of a logic circuit which permits the switching of supply potentials and clock signals and the transmission of output signals to a common output signal line in dependence on activation levels, the individual sensor elements (60) of the CCD sensor lines (4; 5; 6) when used being adapted in terms of their surfaces to the spectral elements of the echelle spectrum to be measured and running one after the other in the direction of dispersion of the echelle grating, the total number of the sensor elements (60) of all the CCD sensor lines (4; 5; 6) on the chip (0) preferably being less when used than the number of the spectral elements in the echelle spectrum, a digital logic circuit permitting the signals of a selectable partial amount from all the CCD sensor lines (4; 5; 6) to be read out serially by means of the activation levels selected by the logic circuit, in a selectable sequence via the common output signal line in dependence on external control signals, and each photosensor additionally containing between the sensor memory and the transport shift register (64) of the CCD sensor line (4; 5; 6) an intermediate storage arrangement (62) and the transfer gate (61) between the sensor memories of all the lines and the respective intermediate storage arrangements (62) of all the lines (4; 5; 6) being connected in parallel.

2. Echelle spectrometer according to Claim 1, characterized in that the height of the individual sensor elements (60) of the CCD sensor lines (4; 5; 6) is identical to the minimum spacing between adjacent order lines in the echelle spectrum and the width of the individual sensor elements is identical to the width of the apparatus necessitated by abberation in the echelle spectrum.

3. Echelle spectrometer according to Claim 1, characterized in that the digital logic circuit is in the form of two decoding arrangements which control a two-dimensional arrangement of activation lines (8; 9; 10).

## Revendications

1. Spectromètre-échelle pour l'analyse des spectres partiels de haute résolution faisant partie d'un spectre-échelle, doté d'un détecteur photoélectrique à résolution locale, possédant plusieurs détecteurs photoélectriques disposés sur une puce de circuit intégré (0), sur les emplacements (1;2;3) des lignes spectrales présélectionnées dans le plan focal du spectromètre-échelle, dans lequel chacun des détecteurs photoélectriques comporte une rangée de capteurs C.C.D (4,5,6) ainsi qu'un circuit logique qui permet, indépendamment des niveaux d'activation, la commutation des potentiels d'alimentation et des signaux de synchronisation ainsi que le transfert des signaux de sortie sur un circuit d'acheminement des signaux de sortie commun,
dans lequel les unités de détection (60) des rangées de détecteurs C.C.D. (4;5;6) sont, pris isolément et en configuration d'utilisation, adaptées aux éléments spectraux du spectre-échelle à mesurer, relativement à leurs plans focaux et se succèdent les unes à la suite des autres dans la direction de la dispersion du réseau-échelle,
dans lequel le nombre total des unités de détection (60) de toutes les rangées de détecteurs C.C.D. (4;5;6) disposés sur la puce (0) est, en configuration d'utilisation, de préférence inférieur au nombre des éléments spectraux dans le spectre-échelle,
dans lequel un circuit logique numérique permet, par le niveau d'activation qu'il commande, la sélection sérielle des signaux d'une quantité partielle, qu'il est possible de fixer, de toutes les rangées de détecteurs C.C.D (4;5;6) suivant une succession discrétionnaire par le circuit d'acheminement commun des signaux de sortie en fonction des signaux de commande extérieurs,
dans lequel chaque détecteur photoélectrique contient en plus un système de mémorisation temporaire (62), entre l'unité de stockage du détecteur et le registre à décalage de transfert (64) de la rangée de détecteurs C.C.D. (4;5;6) et
dans lequel les portes de transfert (61) sont montées en parallèle entre les unités de stockage des capteurs de toutes les rangées et les systèmes de mémorisation temporaire respectifs (62) de toutes les rangées (4;5;6).

2. Spectromètre-échelle selon la revendication 1, caractérisé en ce que la hauteur des unités de détection (60), prises individuellement, des rangées de détecteurs C.C.D. (4;5;6) est égale à la distance minimale séparant dans le spectre-échelle les raies d'identification adjacentes et en ce que la largeur des unités de détection, prises individuellement, est égale à la largeur de l'appareil qui est conditionnée par l'aberration à l'intérieure du spectre-échelle.

3. Spectromètre-échelle selon la revendication 1, caractérisé en ce que le circuit logique numérique se présente sous la forme de deux dispositifs de décodage qui gèrent un dispositif à deux dimensions, constitué par des circuits d'acheminement des signaux de niveau d'activation (8;9;10).
